(19) Europäisches Patentamt
European Patent Office
Office européen des brevets

(11) **EP 4 003 882 B1**

(12) **EUROPEAN PATENT SPECIFICATION**

(45) Date of publication and mention
of the grant of the patent:
**31.05.2023 Bulletin 2023/22**

(21) Application number: **20742704.8**

(22) Date of filing: **16.07.2020**

(51) International Patent Classification (IPC):
**B65D 85/804** (2006.01)

(52) Cooperative Patent Classification (CPC):
**B65D 85/8043**

(86) International application number:
**PCT/EP2020/070135**

(87) International publication number:
**WO 2021/018616 (04.02.2021 Gazette 2021/05)**

(54) **CONTAINER FOR BEVERAGE PREPARATION**

BEHÄLTER FÜR GETRÄNKEZUBEREITUNG

RÉCIPIENT POUR PRÉPARATION DE BOISSONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.07.2019 EP 19189304**

(43) Date of publication of application:
**01.06.2022 Bulletin 2022/22**

(73) Proprietor: **Société des Produits Nestlé S.A.
1800 Vevey (CH)**

(72) Inventor: **DOGAN, Nihan
1090 La Croix-sur-Lutry (CH)**

(74) Representative: **Ducreux, Marie
Société des Produits Nestlé S.A.
Avenue Nestlé 55
1800 Vevey (CH)**

(56) References cited:
WO-A1-2013/039585    WO-A1-2014/191412
WO-A1-2018/024587    WO-A2-2012/055751

**Description**

**Technical field**

The present invention relates to a coffee layer structure and to a container. In the light of the present invention, a "container" can be any one of the group consisting of a "capsule" (e.g., a capsule as described in EP 1808382 B1; the container in figure 1 is a capsule similar to the one described in EP 1808382 B1), a "cartridge" (e.g., a cartridge as described in EP3265404 A1), a "pad" (e.g. entirely or partially made of filter paper), a "pod" (e.g., a soft, or otherwise flexible pod), a cup, a tray, or a container as described in EP 18210108.9. or in WO2018024587 A1.

**Background**

In coffee systems, which prepare a beverage from ground coffee particles by extraction, it is generally preferred to use smaller sized coffee particles. The reason is that smaller sized coffee particles provide a (overall) high surface area and thus increase the yield. That is, the comparatively high surface area of the coffee particles in contact with water leads to more interaction between the ground coffee and the water, thereby extracting more solids and flavors from the ground coffee.

Smaller sized coffee particles result, however, in high pressures and blocking in the container. This is because a layer of small coffee particles comes into direct contact with the dispensing wall of the container and agglomerates thereon. The dispensing wall is usually the part of the container through which the injected water and thus beverage extracted from the ground coffee particles exits the container, e.g. for being subsequently dispensed in a mug. For example, the dispensing wall may be a membrane. The agglomeration of the coffee particles on the dispensing wall will prevent, due to the small sized coffee particles, that the water properly flows through the dispensing wall, e.g. towards the (bottom) membrane or a filter of the container, thereby leading to capsule blockage and high pressures. The blocking happens because the resistance effected by the agglomerated coffee particles (container or capsule resistance) reaches the maximum pressure, which the coffee machine can pump (static head of the machine). Usually, the pump of the machine cannot deliver a pressure higher than 12-16 bar. The average pressure required for opening and delivering the (coffee) beverage is about 9-12 bar.

The before-mentioned blocking in the container is disadvantageous, since the beverage cannot be properly delivered and since the machine can be defected or even break down or cause leaking from the container (pod) or machine. In particular, small sized coffee particles and the so effected blocking can lead to a long flow time of the coffee beverage or even result in that the coffee beverage is not coming out of the container; in particular in systems equipped with a bypass valve over a certain pressure (e.g. 9-10 bar) this will result in very long flow time/beverage preparation time. However, and as mentioned hereinabove, the small sized coffee particles are preferred for an increased yield.

Therefore, it is an object of the present invention to provide a coffee layer structure and a container, which overcome the before-mentioned disadvantages, i.e. which in particular do not effect a blocking of the container, but increase the yield of the coffee extraction.

These and other objects, which become apparent upon reading the following description, are solved by the subject-matter of the independent claims. The dependent claims refer to preferred embodiments of the invention.

**Summary**

According to a first aspect of the invention, a coffee layer structure for beverage preparation, comprises a first layer of ground first coffee particles to be extracted having a first volume moment mean D[4,3], and a second layer of ground second coffee particles to be extracted having a second volume moment mean D[4,3]. The coffee layer structure is adapted to be traversed by a flow of water under pressure for preparing a beverage from the coffee particles. The first layer of ground first coffee particles is stratified on the second layer of ground second coffee particles, wherein the second volume moment mean is greater than the first volume moment mean.

According to a second aspect of the invention, a container for beverage preparation comprises a compartment containing ground coffee particles to be extracted, wherein the compartment is adapted to be traversed by a flow of water under pressure from an injection wall of the container towards a dispensing wall of the container for preparing a beverage from the coffee particles. The coffee particles comprise: a first group of first coffee particles having a first volume moment mean D[4,3], and a second group of second coffee particles having a second volume moment mean D[4,3] and being arranged downstream of the first group of first coffee particles, wherein the second group of second coffee particles is in direct contact with the dispensing wall, and wherein the second volume moment mean is greater than the first volume moment mean.

According to a third aspect of the invention, a container for beverage preparation comprises a compartment containing ground coffee particles to be extracted, wherein the compartment is adapted to be traversed by a flow of water under pressure from an injection wall of the container towards a dispensing wall of the container for preparing a beverage from the coffee particles. The coffee particles are arranged in the compartment over a total height. The coffee particles being arranged from the dispensing wall to a first height are second coffee particles having a second volume moment mean D[4,3], wherein the coffee particles being arranged over a second height extending from the first height to the total height of the coffee particles are first coffee particles having a first volume moment mean D[4,3]. The second volume moment mean is greater than the first volume moment mean.

According to a fourth aspect of the invention, a container for beverage preparation comprises a compartment containing ground coffee particles to be extracted, wherein the compartment is adapted to be traversed by a flow of water under pressure from an injection wall of the container towards a dispensing wall of the container for preparing a beverage from the coffee particles. The coffee particles which are in direct contact with the dispensing wall are second coffee particles having a second volume moment mean D[4,3], and the coffee particles which are arranged upstream of the second coffee particles are first coffee particles having a first volume moment mean D[4,3]. The second volume moment mean is greater than the first volume moment mean.

According to a fifth aspect of the invention, a container for beverage preparation is provided by a process comprising the steps of:

-    providing a container with a compartment for containing coffee particles to be extracted, the coffee particles comprising a first group of first coffee particles having a first volume moment mean D[4,3] and a second group of second coffee particles having a second volume moment mean D[4,3], wherein the compartment is adapted to be traversed by a flow of water under pressure from an injection wall of the container towards a dispensing wall of the container for preparing a beverage from the coffee particles,
-    providing the second group of second coffee particles in the compartment such that the second group of second coffee particles is in direct contact with the dispensing wall, and
-    stratifying the first group of first coffee particles on the second group of second coffee particles such that the second group of second coffee particles is arranged downstream of the first group of first coffee particles,

wherein the second volume moment mean is greater than the first volume moment mean.

The "volume moment mean", also called "mass moment mean" or "De Brouckere mean diameter", and which is analogous to moments of inertia, is calculated as follows:

$$D[4,3] = \frac{\sum d^4}{\sum d^3}$$

For example, this value can be calculated/measured with laser diffraction or light scattering. An exemplary machine for measuring the volume moment means by light scattering or laser diffraction is, for example, from the company Malvern Instruments. There is for example a machine (or equipment) called Malvern Mastersizer 3000 (https://www.malvernpanalytical.com/en/products/product-range/mastersizer-range/mastersizer-3000), which is particularly suitable for measuring said volume moment mean. For separating the particles for the measurement, a dry dispersion method or dry dispersion machine called "Aero S" from the company Malvern Instruments may be used (https://www.malvernpanalytical.com/en/products/product-range/mastersizer-range/mastersizer-3000/accessories/aero-s/). With respect to particle size analysis and measuring of particle size, e.g. the volume moment mean, reference is made to the following technical paper: RAWLE, Alan, "Basic Principles of Particle Size Analysis", retrieved from https://www.researchgate.net/profile/loan                Tanu/post/What_is                the_meaning                of_D4_3 _and_D0_5_values_in_grain_size_analysis_and_how_is_it_calculated/attachment/59d6 3265c49f4 78072ea 189a/ AS%3A273 632960417813%401442250590500/ down load/Basic _principles of particle size analysis_MRK034.pdf).

In other words, the present invention proposes to provide larger sized coffee particles, i.e. the coffee particles with the second volume moment mean, in direct contact with the dispensing wall, e.g. on the bottom of the container, such that the smaller sized coffee particles, i.e. the coffee particles with the first volume moment mean, cannot come in direct contact with the dispensing wall. The coffee particles with the second volume moment mean, however, let the water flow in between these coffee particles such that the water and thus the beverage can reach the dispensing wall and exit the container via the dispensing wall. Thereby, the coffee particles with the second volume moment mean prevent or at least reduce a blockage of the container due to an agglomeration of the first coffee particles on the dispensing wall. At the same time, the yield of the coffee extraction is improved, since the beverage exiting the container via the dispensing wall is extracted from the coffee particles with second volume moment mean and from the coffee particles with the first volume moment mean, which is smaller than the second volume moment mean and thus effect a higher (overall) surface area than the coffee particles with the second volume moment mean for a given overall volume.

The second volume moment mean may be equal to or greater than 350μm, preferably equal to or greater than

400 μm or 450 μm or 500 μm or 550 μm or 600 μm or 650 μm or 700 μm. These values of the second volume moment mean can effectively prevent that the coffee particles with the first volume moment mean come into direct contact with the dispensing wall and agglomerate thereon. Thus, a blockage of the container is effectively prevented or at least significantly reduced.

The second volume moment mean may be equal to or less than 900 μm, preferably equal to or less than 850 μm or 800 μm or 750 μm or 700 μm or 650 μm or 600 μm. These values of the second volume moment mean particularly prevent or at least significantly reduce blockage, while still ensuring a high yield of the coffee extraction from the coffee particles with the second volume moment mean.

The second volume moment mean may be at least 15 % or at least 20 % or at least 30 % greater than the first volume moment mean. Thus, blockage of the container is effectively prevented or at least reduced, while having a particularly improved yield of the coffee extraction.

Preferably, the first coffee particles having the first volume moment mean have a first volume, and the second coffee particles having the second volume moment have a second volume. The ratio of the first volume to the second volume is in the range from 1:1 to 20:1, preferably in the range from 10:1 to 20:1. Thereby, the first volume provides an overall surface area of the coffee particles, which is greater than the overall surface area of the coffee particles of the second volume, so that the yield of the coffee extraction is improved, and a blockage of the container is effectively prevented or at least significantly reduced.

The first coffee particles may be layered onto the second coffee particles, and/or the first coffee particles may be in direct contact with the second coffee particles. Thus, the first and second coffee particles can be easily provided in the container, e.g. by simply filling the container with the respective coffee particles.

The second coffee particles may be arranged such that the flow of water for preparing the beverage can exit the container only via the second coffee particles. As such, it is ensured that water flowing between the first coffee particles for coffee extraction is subsequently always flowing between the second coffee particles before reaching the dispensing wall. Thereby, prevention or at least reduction of blocking of the container, while ensuring a high yield of the coffee extraction, is effectively achieved.

The second coffee particles may be layered onto the dispensing wall, and/or the first coffee particles and/or the second coffee particles may be provided as a coffee bed, and/or the second coffee particles may cover the whole dispensing wall.

The second coffee particles may be provided, in particular layered, in the container with a height, preferably the (before-mentioned) first height, from the dispensing wall to the first coffee particles, wherein the height is preferably equal to or greater than 1000 μm, more preferably equal to or greater than 1500 μm or 2000 μm or 2500 μm or 3000 μm or 3500 μm or 4000 μm or 4500 μm or 5000 μm. The height is preferably measured along a line, which is substantially perpendicular to the dispensing wall and/or parallel to an axis of the container, e.g. the symmetry axis of the container. These heights of the second coffee particles particularly reliably prevent the first coffee particles from coming into direct contact with the dispensing wall, since according to these heights the first coffee particles must travel comparatively long paths between the second coffee particles until coming into direct contact with the dispensing wall.

Preferably, a ratio of the height to the second volume moment mean is at least 2:1 or at least 5:1 or at least 9:1. For example, the second coffee particles, e.g. the layer of the second coffee particles, may have a height of 5 mm and a second volume moment means of 600 μm, wherein, for example, the first coffee particles, e.g. the layer of the first coffee particles, may have a height of 15 mm and a first volume moment means of 330 μm.

The first coffee particles may be provided, in particular layered, in the container with a further height, preferably the (before-mentioned) second height, from the second coffee particles, preferably the first height, to a total height of the coffee particles. For example, the further height may be equal to or greater than 5000 μm or 6000 μm or 7000 μm or 8000 μm or 9000 μm or 10000 μm or 11000 μm or 12000 μm or 13000 μm or 14000 μm or 15000 μm or 16000 μm or 17000 μm. The further height is preferably measured along a line, which is substantially perpendicular to the dispensing wall and/or parallel to an axis of the container, e.g. the symmetry axis of the container. The further height particularly defines the amount of the first coffee particles and thus the overall surface area of the first coffee particles. Thus, according to these ranges of the further height, a particularly good yield of the coffee extraction can be achieved.

For a particularly good prevention of blocking of the container while still having an improved yield of the coffee extraction, a ratio of the height to the further height is, for example, preferably in the range from 1:1 to 1:20, more preferably in the range from 1:10 to 1:20 or from 1:1 to 1:15, even more preferably in the range from 1:2 to 1:5, for example in the range from 1:3 to 1:4.

The container may be adapted to hold the coffee particles in a predefined manner, preferably the first and/or second coffee particles at the respective first and second height. For example, the compartment comprises a holding structure being designed for holding the coffee particles in the predefined manner. Additional or alternatively, the coffee particles may be provided in the compartment with a compactness, which effects that the first and/or second coffee particles remain in the predefined manner. That is, the compactness may effect resulting forces acting among the coffee particles and on the compartment, thereby holding the first and/or second coffee particles in the predefined manner, in particular during handling and transport of the container. Thereby, no coffee particles of the first coffee particles or at least an insignificant little amount of the first coffee particles migrate between the second coffee particles during handling or transport of the container.

The holding structure may be integrally formed with the compartment. For example, the holding structure is a protrusion or an indentation of the compartment, which preferably (circumferentially) surrounds the first and/or second coffee particles. Alternatively, the holding structure may be separately provided with respect to the compartment.

The compartment may comprises at least part of the injection wall and/or at least part of the dispensing wall and/or a sidewall surrounding the coffee particles, wherein the injection wall and/or the dispensing wall and/or the sidewall preferably is in direct contact with the coffee particles. The injection wall and/or the dispensing wall and/or the sidewall preferably comprises the holding structure, and/or wherein, preferably, the holding structure is integrally formed with or separately provided with the injection wall and/or the dispensing wall and/or the sidewall.

The first volume moment mean may be less than 550 $\mu$m, preferably equal to or less than 500 $\mu$m or 450 $\mu$m or 400 $\mu$m or 380 $\mu$m or 350 $\mu$m or 300 $\mu$m or 250 $\mu$m or 200 $\mu$m or 150 $\mu$m or 100 $\mu$m. These volume moment means (and preferably also the volume moment means of the second coffee particles) may be achieved by using an appropriate grinder, e.g. a roll grinder, and/or an appropriate (physical) sieve. These volume moment means effect a high surface area of the first coffee particles for a high yield of the coffee extraction, while still being big enough to prevent that the first coffee particles flow between the second coffee particles for coming into direct contact with the dispensing wall and effect blocking.

The dispensing wall may comprise a filter for preventing at least the second coffee particles from passing through the dispensing wall. In particular, the filter may be integrally provided with the dispensing wall or separately provided with respect to the dispensing wall, and/or the filter may be provided downstream or upstream from the dispensing wall.

The dispensing wall may comprise apertures or may be arranged to be provided with apertures. The apertures may be apertures (or pores or small (filtering-) openings) of the before-mentioned filter for providing the filtering function of the filter, or the apertures may be apertures of a mesh, e.g. of a mesh of the before-mentioned filter, for providing a filtering function. In another example, opening means (provided with the container or provided separately with respect to the container) may engage with the dispensing wall to provide the apertures. Each of the apertures is smaller than the second volume moment mean such that the second coffee particles are prevented from passing through the apertures and thus through the dispensing wall but such that the beverage can flow through the apertures. Preferably, the diameter of each of the apertures (which may be defined by its mesh size if the dispensing wall is a mesh or filter) or the largest possible distance between two points of the outline of each of the apertures is smaller than the second volume moment mean, preferably at least 10% or 20 % or 30 % or 40 % or 50 % smaller than the second volume moment mean. In particular in an example, in which the flow area of each of the apertures is in the form of a circle, the respective aperture has a diameter. In general, each of the apertures is not restricted to a specific outline. The respective outline, i.e. the outline of the respective flow area, may be in the form of a circle, an oval, a rectangle, a polygon or the like. In the example, in which the outline is in the form of a circle, the largest possible distance between two points of the outline is the diameter of the aperture. For example, the diameter of each of the apertures or said largest possible distance, i.e. the opening size of the apertures, is equal to or less than 400 $\mu$m, preferably equal to or less than 350 $\mu$m, and/or is equal to or greater than 200 $\mu$m, preferably equal to or greater than 250 $\mu$m.

A sixth aspect of the invention is the use of a container as previously described in a beverage preparation machine for the preparation of a beverage. The beverage preparation machine comprises, for example, at least a water supply (e.g. a water connection to be (directly or indirectly) connected to another water supply (e.g. an external water supply) and/or a water tank or water holder, which can be refilled), and a pump for providing the flow of water under pressure in order to prepare the beverage from the coffee particles by extraction. The beverage preparation machine may also comprise a heater, e.g. a thermoblock, for heating the water of the water tank to be injected into the container. The beverage preparation machine may be an extraction machine.

A process for producing a container for beverage preparation, e.g. a container as described herein above, comprises the steps of:

- providing a container with a compartment for containing coffee particles to be extracted, the coffee particles comprising a first group of first coffee particles having a first volume moment mean D[4,3] and a second group of coffee particles having a second volume moment mean D[4,3], wherein the compartment is adapted to be traversed by a flow of water under pressure from an injection wall of the container towards a dispensing wall of the container for preparing a beverage from the coffee particles,
- providing the second group of coffee particles in the compartment such that the second group of coffee particles is in direct contact with the dispensing wall, and
- stratifying the first group of coffee particles on the second group of coffee particles such that the second group of coffee particles is arranged downstream of the first group of coffee particles,

wherein the second volume moment mean is greater than the first volume moment mean.

The coffee particles contained in the compartment may be provided with a certain quantity, e.g. sufficient for the preparation of a coffee beverage for one mug, or two, or more. The certain quantity may preferably vary between 4 and 30 g. The quantity of the first coffee particles may, for example, vary between 4 and 10 g, and/or the quantity of the second coffee particles may, for example, vary between 0.5 and 5 g.

## Brief description of drawings

In the following, the invention is described exemplarily with reference to the enclosed figures, in which :

Figure 1     is a schematic perspective view of a container according to a preferred embodiment of the invention;
Figure 2     is a schematic cross-sectional detail view of the container according to figure 1 with a coffee layer structure not comprising the second coffee particles; and
Figure 3     is a schematic cross-sectional detail view of the container according to figure 1 with a coffee layer structure according to a preferred example of the invention.

## Detailed description of embodiments

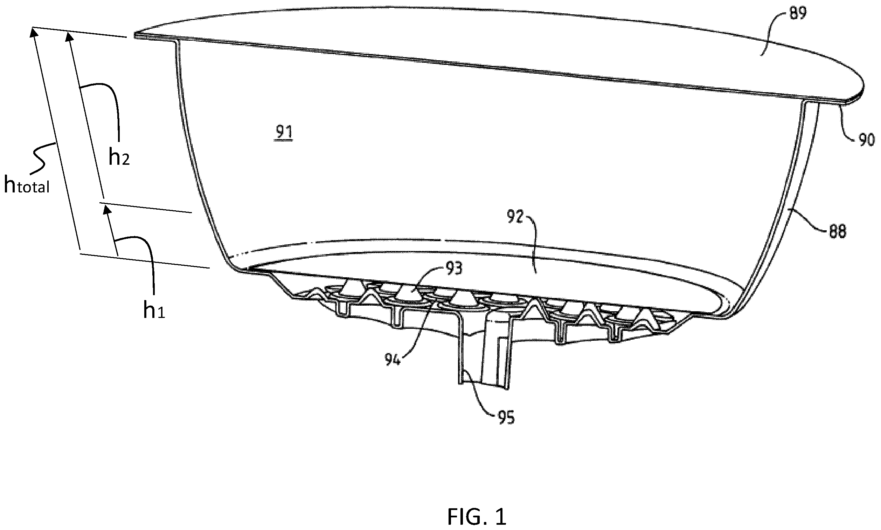

Figure 1 is a schematic perspective view of a container according to a preferred embodiment. The container shown in figure 1 may be a capsule. The invention is, however, not limited to a specific container as long as the container is suitable for the preparation of a beverage under pressure, e.g. a coffee beverage (for instance, espresso coffee), which is, for example, prepared by coffee extraction under pressure. The container may be a container, which is insertable in a machine. The container may be a package, which contains the substance (i.e. the coffee particles as described below) for the preparation of the beverage, wherein the package preferably surrounds the substance on all sides. The container may contain the substance in an aroma-proof manner. The container may be a capsule (e.g., a capsule as described in EP 1808382 B1; the container in figure 1 is a capsule similar to the one described in EP 1808382 B1), a cartridge (e.g., a cartridge as described in EP3265404 A1), a (coffee) pad (e.g. entirely or partially made of filter paper), a (coffee) pod (e.g., a soft, or otherwise flexible pod), a cup, a tray, or a container as described in EP 18210108.9. The container may be entirely flexible or at least partially flexible, i.e. semi-rigid.

As exemplarily shown in figure 1, the container comprises a compartment 91 containing ground coffee particles to be extracted, i.e. roasted ground coffee particles (R&G coffee). The coffee particles may additionally comprise (edible) additives, in particular additives that have an effect on the flavor of the beverage, e.g. non-soluble (chicory, cinnamon pieces, etc.) and/or soluble elements (sugar, soluble coffee, milk powder, etc.), instant coffee, a syrup concentrate, a fruit concentrate, a chocolate product, a milk-based product or any other dehydrated edible substance. The additives may be (essentially homogenously) mixed with the coffee particles. The coffee particles may be in a powdered form. For the sake of clarity, the coffee particles are not shown in figure 1. The compartment 91 may comprise a sidewall 88, which surrounds the coffee particles. The compartment 91 may comprise a bottom and a top. The sidewall 88 may extend from the bottom to the top of the compartment 91. This, however, is not required. For example, the compartment may comprise only one wall, e.g. a single sheet, which preferably surrounds the coffee particles on all sides. Alternatively, the compartment may comprise only two walls, e.g. only a top wall and a bottom wall.

The compartment 91 shown in figure 1 has a substantially cylindrical or conical form, in particular a truncated conical form. The compartment 91 may in general have a vaulted form, e.g. a form which widens or tapers from the dispensing wall 92 towards the injection wall 89 (described further below), or also different forms. For example, the compartment 91 may have a prismatic form, the form of a truncated pyramid or a substantially flat form, e.g. a disc shaped form. In a top view of the compartment 91, the compartment 91 may have a circular, elliptical, angled (polygonal, rectangular, square, etc.) form.

The container may be a positionable or a non-positionable container. A positionable container is to be understood as a container, which due to its form automatically positions and/or orientates the container in a machine such that the container can be used in the machine for the preparation of a beverage. The sidewall 88 may be the outer wall of the container. For example, the sidewall 88 is designed to position and/or orientate the container in a machine such that the container can be used in the machine for the preparation of a beverage. In order to appropriately position and/or orientate the container in the machine, the sidewall 88 may have a specific form (e.g. an asymmetric form along the vertical and/or the horizontal axis) and/or comprise specific structures, e.g. a flange.

The compartment 91 is adapted to be traversed by a flow of water under pressure from an injection wall 89 of the container towards a dispensing wall 92 of the container for preparing a beverage from the coffee particles contained in the compartment 91. The water is preferably hot or warm water and/or preferably has a high temperature, e.g. in the range from 90°C to 100°C. The container is, however, not restricted to a particular form of coffee extraction such as coffee extraction with hot water. For example, the coffee extraction may also be a coffee extraction with relatively cold water, also known as cold (coffee) extraction or cold (coffee) brewing. Said cold water preferably has a temperature typically used in cold extraction or cold brewing, in particular around room temperature, e.g. in the range from 16°C to 22°C, preferably in the range from 19°C to 21°C. In particular in cold extraction, blocking and back pressure in the container is a challenge due to the viscosity of the water at the respective temperatures. As further explained below, the container of the present invention, however, can effectively prevent or at least reduce this blocking and too high back pressure.

The compartment 91 preferably comprises at least part of or the entire injection wall 89. The injection wall 89 preferably closes the compartment 91 on the top of the compartment 91; thus, the injection wall 89 is preferably the lid of the compartment 91. The injection wall 89 is adapted such that the flow of water can be introduced into the compartment 91 via the injection wall 89. For example, the injection wall 89 is designed such that the injection wall 89 can be punctured (by a needle or other puncturing elements) or otherwise teared for the introduction of the flow of water. The injection wall 89 may also be designed such that water can flow through the injection wall 89 without puncturing the injection wall 89, e.g. by an appropriate design of the injection wall 89. The injection wall 89 is preferably a membrane or any other thin film. The injection wall 89 is not limited to a specific form or shape. For example, the injection wall 89 may have a flat form, a shell form, a concave form and/or a convex form, in particular in a state in which the compartment 91 and, thus, the injection wall 89 are not pressurized by the flow of water. The concave form of the injection wall 89 is preferably provided such that the concave side faces the inside of the compartment 91. The convex form of the injection wall 89 is preferably provided such that the convex side faces the inside of the compartment 91.

The injection wall 89 may be fixedly attached to the sidewall 88, in particular in a fluid-tight way. For example, the injection wall 89 is attached to the sidewall 88 by welding, heat-sealing or any other adhesive bond. The injection wall 89 may be attached onto the periphery of the compartment 91 or sidewall 88, e.g. welded along a peripheral weld line 90 of the compartment 91 or sidewall 88. The weld line 90 may be a flange extending from the upper end of the sidewall to an outside of the container. In other examples, the injection wall 89 may also be differently attached, e.g. directly attached to the dispensing wall 92 without the need of the sidewall 88.

The compartment 91 preferably comprises at least part of or the entire dispensing wall 92. The dispensing wall 92 preferably closes the compartment 92 on the bottom of the compartment 92. As such, the dispensing wall 92 retains the coffee particles in the compartment 92 at the bottom of the compartment 92. The dispensing wall 92 may be fixedly attached to the sidewall 88, in particular in a fluid-tight way. For example, the dispensing wall 92 is attached to the sidewall 88 by welding, heat sealing or any other adhesive bond. The dispensing wall 92 may be attached to a lower end of the sidewall 88, e.g. to a flange extending from the lower end. The dispensing wall 92 may also be (directly) attached to the injection wall 89 without the need of the sidewall 88. The dispensing wall 92 may be integrally formed with the sidewall 88 or the injection wall 89. The dispensing wall 92 is preferably arranged or adapted such that the flow of water can exit the container and/or the compartment 91 via the dispensing wall 92, e.g. to be subsequently dispensed into a mug, which is provided downstream of the dispensing wall 92. The dispensing wall 92 is preferably a thin film. The dispensing wall 92 is not limited to a specific form or shape. For example, the dispensing wall 92 may have a flat form, a shell form, a concave form and/or a convex form, in particular in a state in which the compartment 91 and, thus, the dispensing wall 92 are not pressurized by the flow of water. The concave form of the dispensing wall 92 is preferably provided such that the concave side faces the inside of the compartment 91. The convex form of the dispensing wall 92 is preferably provided such that the convex side faces the inside of the compartment 91. For example, the container may be designed such that the container comprises no further elements downstream of the dispensing wall 92, i.e. the water exits the container via the dispensing wall 92.

The dispensing wall 92 may be arranged such that one or more elements (opening elements or means) allow opening of the dispensing wall 92 in order to let the flow of water flow via the dispensing wall 92 to exit the compartment 91. The one or more elements may be provided with the container (i.e. the container comprises its own one or more (opening) elements, e.g. housed in the container, preferably in the compartment 91 or outside of the compartment 91) or may also be provided outside the container (i.e. the container and the one or more (opening) elements are separated from one another), e.g. as a part of the machine, in which the container is used. For providing the one or more elements with the container, the one or more elements may be provided in the bottom of the container and/or downstream of the dispensing wall 92. The dispensing wall 92 may cover the one or more elements. For example, the allowing of the opening of the dispensing wall 92 by the one or more elements may be activated by the rise of pressure of the water (or any other liquid or fluid) introduced into the compartment 91, in particular at the time of coffee extraction. Allowing opening of the dispensing wall 92 by the one or more elements may be effected by a relative engagement between the one or more elements and the dispensing wall 92. "Relative engagement" is to be understood that either the one or more elements or the dispensing wall 92, or alternatively both can be moved one with respect to the other to effect the opening of the dispensing wall 92. The relative engagement may effect a puncturing or tearing of the dispensing wall 92. Thus, the one or more elements may function as one or more puncturing or tearing elements.

In the preferred embodiment shown in **figure 1,** the one or more elements comprise raised elements 93 in the form of a pyramid shape. The one or more elements may also comprise any other puncturing elements (points, blades, knives, needles, etc.) or any other recessed or raised elements, e.g. in the form of a cone-shape, pyramid-shape or any other geometry suitable for allowing opening of the dispensing wall 92. The raised elements 93 are provided in the bottom of the container. Thus, the raised elements 93 preferably form the bottom of the container. The one or more elements may further comprise recessed elements 94, which preferably also form the bottom of the said container. The one or more elements, i.e. the raised elements 93 and the recessed elements 94, are covered by the dispensing wall 92. As such, the water is introduced via the injection wall 89 and the rise in pressure will press the dispensing wall 92 against the one or more elements so as to allow opening of the dispensing wall 92, e.g. by tearing the dispensing wall 92, and thus the beverage can flow out of the container, e.g. into a mug arranged beneath or downstream of the container.

The pressure of the flow of water, which traverses the compartment 91 from the injection wall 89 to the dispensing wall 92, is sufficient for coffee extraction, i.e. sufficient for dissolving the soluble solids and flavors from the ground coffee particles in the introduced water for preparing the beverage from these coffee particles. Preferably, the pressure of the flow of water is also sufficient to press the dispensing wall 92 against the one or more elements in order to allow opening of the dispensing wall 92. This (extraction) pressure may be equal to or greater than 4 bar or 6bar or 8 bar or 10 bar, and/or equal to or less than 15 bar or 14 bar or 13 bar or 12 bar or 11 bar or 10 bar. Preferably this pressure is about 13 bar, e.g. in the range from 12 bar to 14 bar.

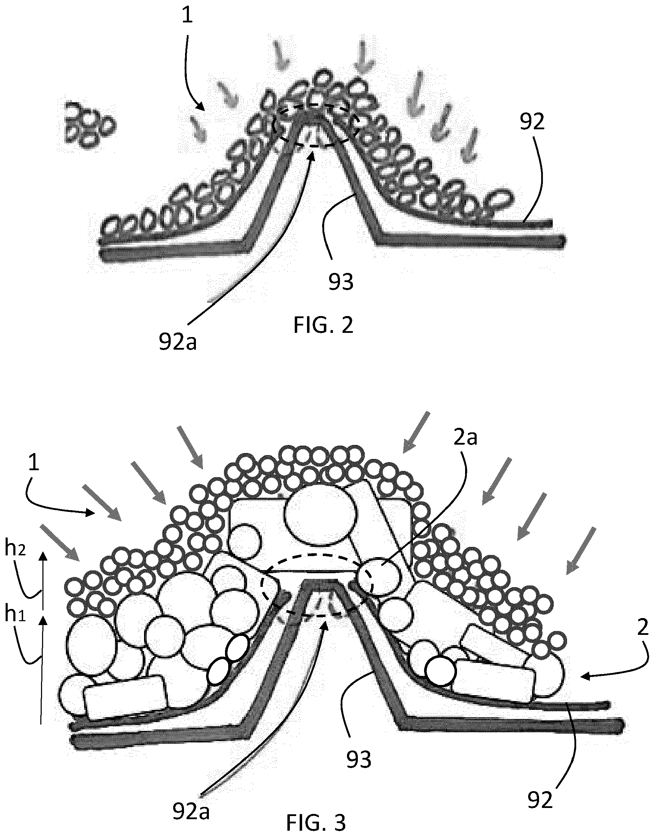

The dispensing wall 92 is adapted to prevent the coffee particles from passing through the dispensing wall 92 downstream, e.g. in the mug. Thus, the dispensing wall 92 comprises a filter or is designed as a filter or can be formed to a filter, e.g. by the one or more elements. For example, and as can be seen in figures 2 and 3, the dispensing wall 92 comprises (at least at the time, when the beverage is to be dispensed from the container, e.g. when the one or more elements open the dispensing wall 92) small openings or apertures 92a, e.g. pores, which are smaller than the coffee particles for preventing the coffee particles from flowing downstream from the dispensing wall 92, but allowing the beverage to flow through. Figures 2 and 3 exemplarily show a detailed view of one of the raised elements 93 of **figure 1,** which engaged with the dispensing wall 92 in order to open the dispensing wall 92, thereby forming one of the small openings 92a and thus a filter. The arrows in figures 2 and 3 indicate the pressure and thus forces acting on the coffee particles due to the water under pressure, which can be used for engaging the dispensing wall 92 with the raised elements 93.

The filter may also be separately provided with respect to the dispensing wall 92, e.g. downstream of the dispensing wall 92. In another example, the one or more (opening) elements may comprise a filtering function. For example, each of the one or more elements comprises a respective cavity, which, after puncturing or tearing of the dispensing wall 92, enters in communication with the internal volume of the compartment 91 so that the beverage flows out of the container via the one or more cavities of the one or more elements; however, the respective cavities prevent that (e.g. due to their diameters) the coffee particles flow via the one or more cavities and, thus, out of the container and into the mug.

**Figure 2** schematically shows an example, in which comparatively small coffee particles 1, i.e. coffee particles having a volume moment mean of less than 350 $\mu$m, are in direct contact with the dispensing wall 92. According to this example, the small coffee particles 1 will agglomerate on the small opening 92a and reduce the passage of the small opening 92a. This is due to the small coffee particles 1 and the water, which squeeze the small opening 92a and thus reduce the passage of the small opening 92a. As a result, not only the coffee particles 1 are prevented from flowing through the dispensing wall 92, but also the water is prevented from (properly) flowing through the dispensing wall 92, thereby resulting in blocking and thus high pressure in the container, which might also defect the beverage preparation machine failing to provide/pump the water with the required pressure.

In order to address the before-mentioned disadvantage of blocking, while still having coffee particles with a comparatively small particle size, in particular to have an increased yield of the coffee extraction, the invention proposes to provide the coffee particles contained in the compartment 91 such that the coffee particles comprise first coffee particles 1 and second coffee particles 2 as described in the following.

According to a first embodiment, in particular with reference to **figure 2,** the coffee particles contained in the compartment 91 comprise a first group of first coffee particles 1 having a first volume moment mean D[4,3], and a second group of second coffee particles 2 having a second volume moment mean D[4,3]. The second group of second coffee particles 2 is arranged downstream of the first group of first coffee particles 1 and is in direct contact with the dispensing wall 92. The second volume moment mean is greater than the first volume moment mean. A "group" is to be understood as a complete and thus not separated unit.

Thus, due to the second group of second coffee particles 2 having the greater second volume moment mean compared with the first volume moment mean of the first group of first coffee particles 1, the first coffee particles 1 are substantially prevented from coming into direct contact with the dispensing wall 92, in particular prevented from coming into direct contact with the small openings 92a, as exemplarily shown in figure 3. The before-mentioned blocking by the first coffee particles 1 is thus effectively prevented or at least significantly reduced. The second coffee particles 2 with the second volume moment mean, however, let the water, and thus the extracted coffee beverage, flow in between these second coffee particles 2 such that the water can reach the dispensing wall 92 and exit the container via the dispensing wall 92, e.g. for being subsequently dispensed in a mug. For example, each of the apertures (small openings or pores) 92a is smaller than the second volume moment mean such that the second coffee particles 2 are prevented from passing through the apertures 2 and thus through the dispensing wall 92 but such that the beverage can flow through the apertures. Thereby, it is effectively prevented that the second coffee particles 2 block the apertures 92a and the dispensing wall 92. Each of the apertures 92a, i.e. the flow area of each of the apertures 92a, is not restricted to a specific outline (or profile). That is, said outline may be in the form of a circle, an oval, a rectangle, a polygon or the like. Preferably, the diameter of each of the apertures or the largest possible distance between two points of the outline of each of the apertures or the mesh size of the dispensing wall 92 being a filter or mesh is smaller than the second volume moment mean, preferably at least 10% or 20 % or 30 % or 40 % or 50 % smaller than the second volume moment mean. For example, the diameter of each of the apertures or said largest possible distance, i.e. the opening size of the apertures, is equal to or less than 400 $\mu$m, preferably equal to or less than 350 $\mu$m, and/or is equal to or greater than 200 $\mu$m, preferably equal to or greater than 250 $\mu$m.

The second group of second coffee particles 2 is preferably provided such that the second group of second coffee particles 2 at least covers some of the openings 92a or parts of the dispensing wall 92, where the openings 92a will be provided. These parts of the dispensing wall 92 may be opened by the one or more elements for providing the openings 92a. Thus, the second group of second coffee particles 2 may cover only a part of the dispensing wall 92, e.g. in the form of a cluster or a hill, so that the blocking is prevented at least for this part of the dispensing wall 92. It is, however, preferred that the (second group of) second coffee particles 2 cover the whole dispensing wall 92, thereby covering all of the openings 92a or all parts of the dispensing wall 92, where the openings 92a will be provided. Additionally or alternatively, the second coffee particles 2 may be arranged such that the flow of water for preparing the beverage can exit the container only via the second coffee particles 2. The second coffee particles 2 may be arranged to be in direct contact with the sidewall 88.

Furthermore, the (second group of) second coffee particles 2 is not restricted to a specific form, as long as the before-mentioned blocking is prevented or at least reduced for some of, preferably for most of (at least 50 %), the parts or openings 92a of the dispensing wall 92. Thus, the second coffee particles 2 may be layered onto the dispensing wall (e.g. with a constant thickness) and/or provided as a coffee bed and/or have a spherical form in a cross-sectional view.

As exemplarily shown in **figure 3,** the first coffee particles 1 may be layered onto the second coffee particles 2 and/or may be in direct contact with the second coffee particles 2. Thus, no element such as a partition wall needs to be provided between the first coffee particles 1 and the second coffee particles 2. The first coffee particles 1 may be contained in the compartment 91 to be in direct contact with the sidewall 88 and/or the injection wall 89. When the second coffee particles 2 cover only a part of the dispensing wall 92 as described above, the first coffee particles 1 may be in direct contact with the dispensing wall 92. As such, the first coffee particles 1 may block a part of the dispensing wall 92 (e.g. some openings 93a), however since the second coffee particles 2 still cover most of the dispensing wall 92 (and thus most of the openings 92a), blocking of the container is still significantly reduced. It is, however, preferred that no coffee particles of the first coffee particles 1 are in direct contact with the dispensing wall 92. The first coffee particles 1 may be provided as a layer and/or as a coffee bed.

The first coffee particles 1 may be filled in the compartment 91 so as to cover the whole surface of the compartment 91, which is looking into the inside of the compartment 91 (i.e. the inner surface) and which is not covered by the second coffee particles 2. For example, the first coffee particles 1 cover the inner surface of the injection wall 89 and/or the inner surface of the sidewall 88, which is not in direct contact with the second coffee particles 2. The first coffee particles 1 and the second coffee particles 2 may be contained and compacted in the compartment 91, e.g. by the design of the compartment, such that the compaction holds the first coffee particles 1 and the second coffee particles 2 in a predefined manner, in particular in a manner that prevents or at least reduces blocking of the container by the first coffee particles 1, e.g. at the first and second height as described below. The compaction thus prevents or at least reduces that first coffee particles 1 migrate between the second coffee particles 2 to the dispensing wall 92 during transport of the container. The compaction preferably effects a resulting force (e.g. 1000N) effecting that the coffee particles are substantially held together in their predefined manner.

Additionally or alternatively to the compaction, the compartment 91 may comprise a holding structure, which is designed for holding the coffee particles, i.e. the first and second coffee particles 1, 2, in the respective predefined manner. The holding structure may be integrally formed with the compartment 91 (e.g. in the form of one or more indentations and/or protrusions, which preferably surround the respective coffee particles) and/or may be separately provided with respect to the compartment. In particular, the holding structure may be integrally formed with or separately provided with respect to the injection wall 89 and/or the dispensing wall 92 and/or the sidewall 88.

As exemplarily shown in **figures 1** and **2,** the second coffee particles 2 may be provided, e.g. layered, in the container or compartment 91 with a (first) height $h_1$ from the dispensing wall 92 to the (lower surface of the) first coffee particles. The height $h_1$ may be the thickness of the layer of the second coffee particles 2 and/or may be measured along a line, which is perpendicular to the dispensing wall 92 and/or parallel to an axis or symmetry axis of the container or compartment 91, in particular in a state of the dispensing wall 92, in which the dispensing wall 92 is not pressurized or engaged with the one or more elements for opening the dispensing wall 92 and therefore, for example, substantially flat (see **figure 1**). The height $h_1$ is preferably equal to or greater than 1000 $\mu$m, more preferably equal to or greater than 1500 $\mu$m or 2000 $\mu$m or 2500 $\mu$m or 3000 $\mu$m or 3500 $\mu$m or 4000 $\mu$m or 4500 $\mu$m or 5000 $\mu$m.

As in particular shown in **figure 1,** the first coffee particles 1 may be provided, e.g. layered, in the container or compartment 91 with a further height (second height) $h_2$ from the (upper side of the) second coffee particles 2, e.g. from the first height $h_1$, to a total height $h_{total}$ of the coffee particles. The total height $h_{total}$ of the coffee particles may correspond to the height or depth of the compartment 91, e.g. the distance between the injection wall 89 and the dispensing wall 92. The second height $h_2$ and the total height $h_{total}$ are preferably measured correspondingly to the measurement of the first height $h_1$. That is, the second height $h_2$ and the total height $h_{total}$ may be measured along a line, which is perpendicular to the dispensing wall 92 and/or parallel to an axis or symmetry axis of the container or compartment 91, in particular in a state of the dispensing wall 92, in which the dispensing wall 92 is not pressurized or engaged with the one or more elements for opening the dispensing wall 92 and therefore, for example, substantially flat (see **figure 1**). The height $h_2$ of the first coffee particles 1 may be the thickness of the layer of the first coffee particles, and the total height $h_{total}$ may be the total thickness of the layer of coffee particles consisting of the first coffee particles 1 and the second coffee particles 2. The second height $h_2$ is preferably equal to or greater than 5000 $\mu$m or 6000 $\mu$m or 7000 $\mu$m or 8000 $\mu$m or 9000 $\mu$m or 10000 $\mu$m or 11000 $\mu$m or 12000 $\mu$m or 13000 $\mu$m or 14000 $\mu$m or 15000 $\mu$m or 16000 $\mu$m or 17000 $\mu$m. A ratio of the first height h1 to the second height h2 is preferably in the range from 1:1 to 1:20, more preferably in the range from 1:10 to 1:20, even more preferably in the range from 1:10 to 1:15 or from 1:2 to 1:5, for example in the range from 1:3 to 1:4.

The first coffee particles 1 may have a first volume, and the second coffee particles 2 may have a second volume. Each of the volumes may be defined by the amount of the respective coffee particles and the volume moment mean of the respective coffee particles. For example, if the first and the second coffee particles 1, 2 are layered in the compartment 91 such that the coffee particles 1, 2 are provided at specific heights $h_1$, $h_2$ and in direct contact with the sidewall, the respective volume can be calculated with the geometry of the compartment 91 (e.g. in the form of a cylinder or truncated cone) and with the respective height. The ratio of the first volume to the second volume may be in the range from 1:1 to 20:1, preferably in the range from 10:1 to 20:1, even more preferably in the range from 10:1 to 15:1 or from 2:1 to 5:1, for example in the range from 3:1 to 4:1.

In the following, a second preferred embodiment is described with reference to **figures 1** and **3,** which also prevents or at least significantly reduces the disadvantage of blocking, while still having coffee particles with a comparatively small particle size for achieving an increased yield of the coffee extraction. The before-mentioned description, in particular of the first embodiment, applies likewise to the second embodiment, unless otherwise described in the following.

According to the second embodiment, the coffee particles are arranged in the compartment 91 over a total height, e.g. the total height $h_{total}$ as described above, wherein the coffee particles being arranged from the dispensing wall 92 to a first height, e.g. the first height $h_1$ as described above, are second coffee particles 2 having a second volume moment mean D[4,3], wherein the coffee particles being arranged over a second height, e.g. the second height $h_2$ as described above, extending from the first height $h_1$ to the total height $h_{total}$ of the coffee particles are first coffee particles 1 having a first volume moment mean D[4,3]. The second volume moment mean is greater than the first volume moment mean.

In the following, a third preferred embodiment is described with reference to **figures 1** and **3,** which also prevents or at least significantly reduces the disadvantage of blocking, while still having coffee particles with a comparatively small particle size for achieving an increased yield of the coffee extraction. The before-mentioned description, in particular of the first and second embodiment, applies likewise to the second embodiment, unless otherwise described in the following.

According to the third embodiment, the coffee particles which are in direct contact with the dispensing wall 92 are second coffee particles 2a having a second volume moment mean D[4,3], wherein the coffee particles which are arranged upstream of the second coffee particles 2a are first coffee particles 1 having a first volume moment mean D[4,3], wherein the second volume moment mean is greater than the first volume moment mean. The third embodiment therefore differs from the other embodiments in particular in that the second coffee particles 2a are coffee particles, which are in direct contact with the dispensing wall, are the second coffee particles 2a.

A common feature of all embodiments is that the second volume moment mean is greater than the first volume moment mean, thereby preventing the coffee particles with the first volume moment mean from coming into direct contact with the dispensing wall. Thus, blocking is effectively prevented or at least reduced, and the yield of the coffee extraction is improved due to the first volume moment mean being smaller than the second volume moment mean. The second volume moment mean is preferably equal to or greater than 350$\mu$m, more preferably equal to or greater than 400 $\mu$m or 450 $\mu$m or 500 $\mu$m or 550 $\mu$m or 600 $\mu$m or 650 $\mu$m or 700 $\mu$m. The second volume moment mean is preferably equal to or less than 900 $\mu$m, more preferably equal to or less than 850 $\mu$m or 800 $\mu$m or 750 $\mu$m or 700 $\mu$m or 650 $\mu$m or 600 $\mu$m. The first volume moment mean is preferably less than 550 $\mu$m, more preferably equal to or less than 500 $\mu$m or 450 $\mu$m or 400 $\mu$m or 350 $\mu$m 300 $\mu$m or 250 $\mu$m or 200 $\mu$m or 150 $\mu$m or 100 $\mu$m. The second volume moment mean may be at least 15 % or at least 20 % or at least 30 % greater than the first volume moment mean.

The container, the compartment 91, the sidewall 88, the injection wall 89 and the dispensing wall 92 are not limited to a specific material. The sidewall 88, the injection wall 89 and/or the dispensing wall 92 may be made of a plastic and/or metallic material, e.g. aluminum, and/or paper (composite). The plastic used may be a plastic, which is compatible in the sphere of foods and chosen from the group consisting of EVOH, PVDC, PP, PE, PA, in a single layer or as a multilayer. The sidewall 88, the injection wall 89 and/or the dispensing wall 92 may also be made of a filter paper and/or any other biodegradable or compostable material. A material is to be understood as "compostable" when the material fulfills the requirements established by the European Norm EN 13431 ("Packaging - Requirements for packaging recoverable through composting and biodegradation - Test scheme and evaluation criteria for the final acceptance of packaging"). The compostable material may be one or more of the following materials: polymers extracted from biomass (for instance, polysaccharides such as cellulose-starch, lipids, proteins); synthetic polymers (for example, polylactic acid - PLA - deriving from fermentation of starch); polymers produced by genetically modified micro-organisms or bacteria (for example, polyhydroxyalkanoates - PHA); polymers from fossil monomers (for example, polybutylsuccinate - PBS); and mixtures of the above (the so-called "compounds") with or without the introduction of additives, such as nanoparticles (e.g., talcum, Cloisite). The material of the filter paper is preferably chosen from the group consisting of filter paper, woven fibres and nonwoven fibres. The fibres may be made of PET (polyethylene terephthalate) or PP (polypropylene) or some other polymer. The thickness of the material used is preferably between 5 and 100 microns depending on the type of material used. The sidewall 88, the injection wall 89 and/or the dispensing wall 92 is/are preferably adapted to close the compartment 91 in an aroma-proof manner. The sidewall 88, the injection wall 89 and/or the dispensing wall 92 may have a single-layer or a multi-layer structure. The sidewall 88, the injection wall 89 and/or the dispensing wall 92 may comprise a coating.

The material of the dispensing wall 92 may have a perforability of not less than 12 N (according to ASTM F 1306 90, rate of penetration: 300 mm/min measured for a 100 $\mu$m thickness sample). The dispensing wall 92 may have a thickness of between 20 $\mu$m and 2 mm, preferably between 50 $\mu$m and 0.5 mm and, in a particularly preferred way, between 60 $\mu$m and 300 $\mu$m. Preferably, the dispensing wall 92 is perforated over at least 25% of the whole surface of the dispensing wall 92.

The container may also include further structures for interacting with the flow of water under pressure. These further structures may be provided upstream or downstream of the dispensing wall 92. An exemplary further structure provided downstream of the dispensing wall is a single opening 95, which is preferably provided concentric with the compartment 91 and/or at the bottom of the container. The opening 95 may be formed as a tubular portion. Thereby, the beverage may run along the recessed elements 94 forming spaces and end up on the opening 95. Thus, this opening 95 allows the beverage to run into the mug (not depicted) arranged beneath or downstream of the opening 95. The container may be fabricated by thermoforming, which may make it possible to directly obtain the before-mentioned one or more elements.

In the following, examples 1-6 are shown for exemplarily demonstrating the effect of the present invention. Each of the examples used a container in the form of a pod or capsule, namely a Nespresso shaped container in examples 1, 5 and 6, and a Nestlé Dolce Gusto (NDG) shaped container in examples 2, 3, 4; in the column of the container design, the ratio in the parentheses following the respective container design indicates the ratio of first to second coffee particles. The last column of the table indicates whether or not the respective container has a product not coming out of the container (PNCO), i.e. whether the container is blocked and thus no or substantially no beverage exits the container (PNCO: YES), or not blocked and thus the beverage exits the container (PNCO: NO).

| | First volume moment mean D[4,3] (first coffee particles) | Second volume moment mean D[4,3] (second coffee particles) | Container design | Machine static head | Max avg pressure during extraction (bar) | PNCO? |
|---|---|---|---|---|---|---|
| 1 | 600 $\mu$m | 300 $\mu$m | Nespresso shape (1:1) | 20 bar | 18 bar | YES |
| 2 | 350 $\mu$m | 350 $\mu$m | NDG shape | 13 bar | 11 bar | YES |
| 3 | 350 $\mu$m | 660 $\mu$m | NDG shape (3:1) | 13 bar | 9 bar | NO |
| 4 | 660 $\mu$m | 660 $\mu$m | NDG shape | 13 bar | 9 bar | NO |
| 5 | 600 $\mu$m | 600 $\mu$m | Nespresso shape | 20 bar | 13 bar | NO |

(continued)

| | First volume moment mean D[4,3] (first coffee particles) | Second volume moment mean D[4,3] (second coffee particles) | Container design | Machine static head | Max avg pressure during extraction (bar) | PNCO? |
|---|---|---|---|---|---|---|
| 6 | 300 μm | 600 μm | Nespresso shape (1:1) | 20 bar | 13 bar | NO |

As can be seen in the comparative examples 1 and 2, the second volume moment mean is very small and results in a blocking of the container. In contrast, in each of the examples 3-6, the second volume moment mean is greater than the second volume moment mean of examples 1 and 2 respectively, thereby not resulting in a blocking of the container; the second coffee particles of examples 3-6 thus effectively control the pressure in the respective container such that no blocking occurs. Furthermore, in each of the examples 3 and 6, the respective second volume moment mean is greater than the respective first volume moment mean. Thus, these examples achieve - due to the smaller first volume moment mean - a higher yield of the coffee extraction compared with examples 4 and 5. Hence, the examples 3 and 6 do not only prevent a blocking of the respective container (in contrast to examples 1 and 2), but also achieve a higher yield of the coffee extraction than examples 4 and 5.

It should be clear to a skilled person that the embodiment shown in the figures is only a preferred embodiment, but that, however, also other designs of a container can be used. In particular, the container is not limited to only (e.g. layers or groups of) the first and second coffee particles. For example, the container may comprise one or more further (e.g. layers or groups of) coffee particles (i.e. in total three or more (layers or groups of) coffee particles), which may be provided upstream the first and/or second coffee particles or between the first and second coffee particles. The second coffee particles thereby effectively prevent blocking in the capsule and therefore give a freedom on providing any form of particles or layers upstream (or on top) of the second coffee particles, in particular (coffee) particles (but also other additives) having a volume moment mean being smaller than the volume moment mean of the second coffee particles.

**Claims**

1. A container for beverage preparation, comprising a compartment (91) containing ground coffee particles (1, 2) to be extracted,

   wherein the compartment (91) is adapted to be traversed by a flow of water under pressure from an injection wall (89) of the container towards a dispensing wall (92) of the container for preparing a beverage from the coffee particles (1, 2),
   wherein the coffee particles (1, 2) comprise:

   a first group of first coffee particles (1) having a first volume moment mean D[4,3], and
   a second group of second coffee particles (2) having a second volume moment mean D[4,3] and being arranged downstream of the first group of first coffee particles (1), wherein the second group of second coffee particles (2) is in direct contact with the dispensing wall (92),
   **characterized in that**
   the second volume moment mean is greater than the first volume moment mean.

2. The container according to claim 1, wherein the second volume moment mean is equal to or greater than 350μm, preferably equal to or greater than 400 μm or 450 μm or 500 μm or 550 μm or 600 μm or 650 μm or 700 μm, and/or wherein the second volume moment mean is equal to or less than 900 μm, preferably equal to or less than 850 μm or 800 μm or 750 μm or 700 μm or 650 μm or 600 μm.

3. The container according to any one of the preceding claims, wherein the second volume moment mean is at least 15 % or at least 20 % or at least 30 % greater than the first volume moment mean.

4. The container according to any one of the preceding claims, wherein the first coffee particles (1) have a first volume, and wherein the second coffee particles (2) have a second volume, wherein the ratio of the first volume to the second volume is in the range from 20:1 to 1:1, preferably in the range from 20:1 to 10:1.

5. The container according to any one of the preceding claims, wherein the first coffee particles (1) are layered onto the second coffee particles (2), and/or wherein the first coffee particles (1) are in direct contact with the second coffee particles (2).

6. The container according to any one of the preceding claims, wherein the second coffee particles (2) are arranged such that the flow of water for preparing the beverage can exit the container only via the second coffee particles (2), and/or wherein the second coffee particles (2) are layered onto the dispensing wall (92), and/or wherein the first coffee particles (1) and/or the second coffee particles (2) are provided as a coffee bed, and/or wherein the second coffee particles (2) cover the whole dispensing wall (92).

7. The container according to any one of the preceding claims, wherein the second coffee particles (2) are provided, in particular layered, in the container with a height ($h_1$), preferably the first height, from the dispensing wall (92) to the first coffee particles (1), wherein the height ($h_1$) is preferably equal to or greater than 1000 $\mu$m, more preferably equal to or greater than 1500 $\mu$m or 2000 $\mu$m or 2500 $\mu$m or 3000 $\mu$m or 3500 $\mu$m or 4000 $\mu$m or 4500 $\mu$m or 5000 $\mu$m, and/or wherein, preferably, a ratio of the height ($h_1$) to the second volume moment mean is at least 2:1 or at least 5:1 or at least 9:1.

8. The container according to any one of the preceding claims, wherein the first coffee particles (1) are provided, in particular layered, in the container with a further height ($h_2$), preferably the second height, from the second coffee particles (2), preferably the first height, to a total height ($h_{total}$) of the coffee particles, and wherein, preferably, the further height is equal to or greater than 5000 $\mu$m or 6000 $\mu$m or 7000 $\mu$m or 8000 $\mu$m or 9000 $\mu$m or 10000 $\mu$m or 11000 $\mu$m or 12000 $\mu$m or 13000 $\mu$m or 14000 $\mu$m or 15000 $\mu$m or 16000 $\mu$m or 17000 $\mu$m, and/or wherein a ratio of the height ($h_1$) to the further height ($h_2$) is preferably in the range from 1:1 to 1:20, more preferably in the range from 1:10 to 1:20 or from 1:1 to 1:15, even more preferably in the range from 1:2 to 1:5, for example in the range from 1:3 to 1:4.

9. The container according to any one of the preceding claims, wherein the compartment (91) comprises at least part of the injection wall (89) and/or at least part of the dispensing wall (92) and/or a sidewall (88) surrounding the coffee particles (1, 2), wherein the injection wall (89) and/or the dispensing wall (92) and/or the sidewall (88) preferably is in direct contact with the coffee particles (1, 2).

10. The container according to any one of the preceding claims, wherein the first volume moment mean is less than 550 $\mu$m, preferably equal to or less than 500 $\mu$m or 450 $\mu$m or 400 $\mu$m or 380 $\mu$m or 350 $\mu$m or 300 $\mu$m or 250 $\mu$m or 200 $\mu$m or 150 $\mu$m or 100 $\mu$m.

11. The container according to any one of the preceding claims, wherein the dispensing wall (92) comprises a filter for preventing at least the second coffee particles (2) from passing through the dispensing wall (92), and/or wherein the dispensing wall (92) comprises apertures (92a) or is arranged to be provided with apertures (92a), wherein each of the apertures (92a) is smaller than the second volume moment mean such that the second coffee particles (2) are prevented from passing through the apertures (92a) and thus through the dispensing wall (92) but such that the beverage can flow through the apertures (92a), wherein, preferably, the diameter of each of the apertures (92a) or the largest possible distance between two points of the outline of each of the apertures (92a) is smaller than the second volume moment mean, preferably at least 10% or 20 % or 30 % or 40 % or 50 % smaller than the second volume moment mean.

**Patentansprüche**

1. Behälter für eine Getränkezubereitung, umfassend ein Fach (91), das gemahlene Kaffeeteilchen (1, 2), die extrahiert werden sollen, enthält,

   wobei das Fach (91) angepasst ist, um durch einen Wasserstrom unter Druck von einer Einspritzwand (89) des Behälters zu einer Abgabewand (92) des Behälters hin zum Zubereiten eines Getränks von den Kaffeeteilchen (1, 2) durchquert zu werden,
   wobei die Kaffeeteilchen (1, 2) umfassen:

      eine erste Gruppe von ersten Kaffeeteilchen (1), die einen ersten Volumenmomentmittelwert D[4,3] aufweist, und

eine zweite Gruppe von zweiten Kaffeeteilchen (2), die einen zweiten Volumenmomentmittelwert D[4,3] aufweist und nachgeschaltet von der ersten Gruppe von ersten Kaffeeteilchen (1) angeordnet ist, wobei die zweite Gruppe von zweiten Kaffeeteilchen (2) in direktem Kontakt mit der Abgabewand (92) steht, **dadurch gekennzeichnet, dass** der zweite Volumenmomentmittelwert größer als der erste Volumenmomentmittelwert ist.

2. Behälter nach Anspruch 1, wobei der zweite Volumenmomentmittelwert gleich oder größer als 350 $\mu$m, vorzugsweise gleich oder größer als 400 $\mu$m oder 450 $\mu$m oder 500 $\mu$m oder 550 $\mu$m oder 600 $\mu$m oder 650 $\mu$m oder 700 $\mu$m ist und/oder wobei der zweite Volumenmomentmittelwert gleich oder kleiner als 900 $\mu$m, vorzugsweise gleich oder kleiner als 850 $\mu$m oder 800 $\mu$m oder 750 $\mu$m oder 700 $\mu$m oder 650 $\mu$m oder 600 $\mu$m ist.

3. Behälter nach einem der vorstehenden Ansprüche, wobei der zweite Volumenmomentmittelwert mindestens 15 % oder mindestens 20 % oder mindestens 30 % größer als der erste Volumenmomentmittelwert ist.

4. Behälter nach einem der vorstehenden Ansprüche, wobei die ersten Kaffeeteilchen (1) ein erstes Volumen aufweisen und wobei die zweiten Kaffeeteilchen (2) ein zweites Volumen aufweisen, wobei das Verhältnis des ersten Volumens zu dem zweiten Volumen in dem Bereich von 20 : 1 bis 1 : 1, vorzugsweise in dem Bereich von 20 : 1 bis 10 : 1 ist.

5. Behälter nach einem der vorstehenden Ansprüche, wobei die ersten Kaffeeteilchen (1) auf die zweiten Kaffeeteilchen (2) geschichtet sind und/oder wobei die ersten Kaffeeteilchen (1) in direktem Kontakt mit den zweiten Kaffeeteilchen (2) stehen.

6. Behälter nach einem der vorstehenden Ansprüche, wobei die zweiten Kaffeeteilchen (2) derart angeordnet sind, dass der Wasserstrom zum Zubereiten des Getränks nur über die zweiten Kaffeeteilchen (2) aus dem Behälter austreten kann und/oder wobei die zweiten Kaffeeteilchen (2) auf die Abgabewand (92) geschichtet sind und/oder wobei die ersten Kaffeeteilchen (1) und/oder die zweiten Kaffeeteilchen (2) als ein Kaffeebett bereitgestellt sind und/oder wobei die zweiten Kaffeeteilchen (2) die ganze Abgabewand (92) bedecken.

7. Behälter nach einem der vorstehenden Ansprüche, wobei die zweiten Kaffeeteilchen (2), insbesondere geschichtet, in dem Behälter mit einer Höhe ($h_1$) bereitgestellt sind, vorzugsweise der ersten Höhe, von der Abgabewand (92) zu den ersten Kaffeeteilchen (1), wobei die Höhe ($h_1$) vorzugsweise gleich oder größer als 1000 $\mu$m, mehr bevorzugt gleich oder größer als 1500 $\mu$m oder 2000 $\mu$m oder 2500 $\mu$m oder 3000 $\mu$m oder 3500 $\mu$m oder 4000 $\mu$m oder 4500 $\mu$m oder 5000 $\mu$m ist und/oder wobei, vorzugsweise, ein Verhältnis der Höhe ($h_1$) zu dem zweiten Volumenmomentmittelwert mindestens 2 : 1 oder mindestens 5 : 1 oder mindestens 9 : 1 ist.

8. Behälter nach einem der vorstehenden Ansprüche, wobei die ersten Kaffeeteilchen (1), insbesondere geschichtet, in dem Behälter mit einer weiteren Höhe ($h_2$) bereitgestellt sind, vorzugsweise der zweiten Höhe, von den zweiten Kaffeeteilchen (2), vorzugsweise der ersten Höhe, zu einer Gesamthöhe ($h_{Gesamt}$) der Kaffeeteilchen und wobei, vorzugsweise, die weitere Höhe gleich oder größer als 5000 $\mu$m oder 6000 $\mu$m oder 7000 $\mu$m oder 8000 $\mu$m oder 9000 $\mu$m oder 10000 $\mu$m oder 11000 $\mu$m oder 12000 $\mu$m oder 13000 $\mu$m oder 14000 $\mu$m oder 15000 $\mu$m oder 16000 $\mu$m oder 17000 $\mu$m ist und/oder wobei ein Verhältnis der Höhe ($h_1$) zu der weiteren Höhe ($h_2$) vorzugsweise in dem Bereich von 1 :1 bis 1 : 20, mehr bevorzugt in dem Bereich von 1 : 10 bis 1 : 20 oder von 1 : 1 bis 1 : 15, noch mehr bevorzugt in dem Bereich von 1 : 2 bis 1 : 5, beispielsweise in dem Bereich von 1 : 3 bis 1 : 4, ist.

9. Behälter nach einem der vorstehenden Ansprüche, wobei das Fach (91) mindestens einen Teil der Einspritzwand (89) und/oder mindestens den Teil der Abgabewand (92) und/oder eine Seitenwand (88), die die Kaffeeteilchen (1, 2) umgibt, umfasst, wobei die Einspritzwand (89) und/oder die Abgabewand (92) und/oder die Seitenwand (88) vorzugsweise in direktem Kontakt mit den Kaffeeteilchen (1, 2) steht.

10. Behälter nach einem der vorstehenden Ansprüche, wobei der erste Volumenmomentmittelwert kleiner als 550 $\mu$m, vorzugsweise gleich oder kleiner als 500 $\mu$m oder 450 $\mu$m oder 400 $\mu$m oder 380 $\mu$m oder 350 $\mu$m oder 300 $\mu$m oder 250 $\mu$m oder 200 $\mu$m oder 150 $\mu$m oder 100 $\mu$m ist.

11. Behälter nach einem der vorstehenden Ansprüche, wobei die Abgabewand (92) ein Filter zum Verhindern eines Durchlaufens mindestens der zweiten Kaffeeteilchen (2) durch die Abgabewand (92) umfasst und/oder wobei die Abgabewand (92) Öffnungen (92a) umfasst oder angeordnet ist, um mit Öffnungen (92a) versehen zu werden, wobei jede der Öffnungen (92a) derart kleiner als der zweite Volumenmomentmittelwert ist, dass das Durchlaufen der zweiten Kaffeeteilchen (2) durch die Öffnungen (92a) und somit durch die Abgabewand (92) verhindert wird, aber derart, dass das Getränk durch die Öffnungen (92a) strömen kann, wobei, vorzugsweise der Durchmesser jeder der Öffnungen (92a) oder der größte mögliche Abstand zwischen zwei Punkten des Umrisses jeder der Öffnungen (92a) kleiner als der zweite Volumenmomentmittelwert ist, vorzugsweise mindestens 10 % oder 20 % oder 30 % oder 40 % oder 50 % kleiner als der zweite Volumenmomentmittelwert.

## Revendications

1. Récipient pour préparation de boissons, comprenant un compartiment (91) contenant des particules de café moulu (1, 2) à extraire,

   dans lequel le compartiment (91) est conçu pour être traversé par un écoulement d'eau sous pression depuis une paroi d'injection (89) du récipient vers une paroi de distribution (92) du récipient pour préparer une boisson à partir des particules de café (1, 2),
   dans lequel les particules de café (1, 2) comprennent :

   un premier groupe de premières particules de café (1) ayant un premier diamètre moyen de De Brouckère D[4,3], et
   un second groupe de secondes particules de café (2) ayant un second diamètre moyen de De Brouckère D[4,3] et étant disposé en aval du premier groupe de premières particules de café (1), dans lequel le second groupe de secondes particules de café (2) est en contact direct avec la paroi de distribution (92),
   **caractérisé en ce que**
   le second diamètre moyen de De Brouckère est supérieur au premier diamètre moyen de De Brouckère.

2. Récipient selon la revendication 1, dans lequel le second diamètre moyen de De Brouckère est égal ou supérieur à 350 $\mu$m, de préférence égal ou supérieur à 400 $\mu$m ou 450 $\mu$m ou 500 $\mu$m ou 550 $\mu$m ou 600 $\mu$m ou 650 $\mu$m ou 700 $\mu$m, et/ou dans lequel le second diamètre moyen de De Brouckère est égal ou inférieur à 900 $\mu$m, de préférence égal ou inférieur à 850 $\mu$m ou 800 $\mu$m ou 750 $\mu$m ou 700 $\mu$m ou 650 $\mu$m ou 600 $\mu$m.

3. Récipient selon l'une quelconque des revendications précédentes, dans lequel le second diamètre moyen de De Brouckère est supérieur d'au moins 15 % ou d'au moins 20 % ou d'au moins 30 % au premier diamètre moyen de De Brouckère.

4. Récipient selon l'une quelconque des revendications précédentes, dans lequel les premières particules de café (1) ont un premier volume, et dans lequel les secondes particules de café (2) ont un second volume, dans lequel le rapport du premier volume au second volume se situe dans la plage de 20:1 à 1:1, de préférence dans la plage de 20:1 à 10:1.

5. Récipient selon l'une quelconque des revendications précédentes, dans lequel les premières particules de café (1) sont déposées en couche sur les secondes particules de café (2), et/ou dans lequel les premières particules de café (1) sont en contact direct avec les secondes particules de café (2).

6. Récipient selon l'une quelconque des revendications précédentes, dans lequel les secondes particules de café (2) sont agencées de telle sorte que l'écoulement d'eau pour préparer la boisson peut sortir du récipient uniquement par l'intermédiaire des secondes particules de café (2), et/ou dans lequel les secondes particules de café (2) sont disposées en couche sur la paroi de distribution (92), et/ou dans lequel les premières particules de café (1) et/ou les secondes particules de café (2) sont fournies sous la forme d'un lit de café, et/ou dans lequel les secondes particules de café (2) recouvrent toute la paroi de distribution (92).

7. Récipient selon l'une quelconque des revendications précédentes, dans lequel les secondes particules de café (2) sont fournies, en particulier en couche, dans le récipient avec une hauteur ($h_1$), de préférence la première hauteur, depuis la paroi de distribution (92) jusqu'aux premières particules de café (1), dans lequel la hauteur ($h_1$) est de préférence égale ou supérieure à 1000 $\mu$m, plus préférablement égale ou supérieure à 1500 $\mu$m ou 2000 $\mu$m ou 2500 $\mu$m ou 3000 $\mu$m ou 3500 $\mu$m ou 4000 $\mu$m ou 4500 $\mu$m ou 5000 $\mu$m, et/ou dans lequel, de préférence, un rapport de la hauteur ($h_1$) au second diamètre moyen de De Brouckère est d'au moins 2:1 ou d'au moins 5:1 ou d'au moins 9:1.

8. Récipient selon l'une quelconque des revendications précédentes, dans lequel les premières particules de café (1) sont fournies, en particulier en couche, dans le récipient avec une hauteur supplémentaire ($h_2$), de préférence la seconde hauteur, à partir des secondes particules de café (2), de préférence la première hauteur, jusqu'à une hauteur totale ($h_{totale}$) des particules de café, et dans lequel, de préférence, la hauteur supplémentaire est égale ou supérieure à 5000 $\mu$m ou 6000 $\mu$m ou 7000 $\mu$m ou 8000 $\mu$m ou 9000 $\mu$m ou 10 000 $\mu$m ou 11 000 $\mu$m ou 12 000 $\mu$m ou 13 000 $\mu$m ou 14 000 $\mu$m ou 15 000 $\mu$m ou 16 000 $\mu$m ou 17 000 $\mu$m, et/ou dans lequel un rapport de la hauteur ($h_1$) à la hauteur supplémentaire ($h_2$) se situe de préférence dans la plage de 1:1 à 1:20, plus préférablement dans la plage de 1:10 à 1:20 ou de 1:1 à 1:15, encore plus préférablement dans la plage de 1:2 à 1:5, par exemple dans la plage de 1 : 3 à 1:4.

9. Récipient selon l'une quelconque des revendications précédentes, dans lequel le compartiment (91) comprend au moins une partie de la paroi d'injection (89) et/ou au moins une partie de la paroi de distribution (92) et/ou une paroi latérale (88) entourant les particules de café (1, 2), la paroi d'injection (89) et/ou la paroi de distribution (92) et/ou la paroi latérale (88) étant de préférence en contact direct avec les particules de café (1, 2).

10. Récipient selon l'une quelconque des revendications précédentes, dans lequel le premier diamètre moyen de De Brouckère est inférieur à 550 $\mu$m, de préférence égal ou inférieur à 500 $\mu$m ou 450 $\mu$m ou 400 $\mu$m ou 380 $\mu$m ou 350 $\mu$m ou 300 $\mu$m ou 250 $\mu$m ou 200 $\mu$m ou 150 $\mu$m ou 100 $\mu$m.

11. Récipient selon l'une quelconque des revendications précédentes, dans lequel la paroi de distribution (92) comprend un filtre pour empêcher au moins les secondes particules de café (2) de traverser la paroi de distribution (92), et/ou dans lequel la paroi de distribution (92) comprend des ouvertures (92a) ou est agencée pour être pourvue d'ouvertures (92a), dans lequel chacune des ouvertures (92a) est plus petite que le second diamètre moyen de De Brouckère de telle sorte que les secondes particules de café (2) sont empêchées de passer à travers les ouvertures (92a) et donc à travers la paroi de distribution (92), mais de sorte que la boisson puisse s'écouler à travers les ouvertures (92a), dans lequel, de préférence, le diamètre de chacune des ouvertures (92a) ou la plus grande distance possible entre deux points du contour de chacune des ouvertures (92a) est plus petit que le second diamètre moyen de De Brouckère, de préférence au moins 10 % ou 20 % ou 30 % ou 40 % ou 50 % plus petit que le second diamètre moyen de De Brouckère.

FIG. 1

FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1808382 B1
- EP 3265404 A1
- EP 18210108
- WO 2018024587 A1

**Non-patent literature cited in the description**

- **RAWLE, ALAN.** *Basic Principles of Particle Size Analysis, https://www.researchgate.net/profile/Ioan Tanu/post/What_is the_meaning of_D4_3 _and_D0_5_values_in_grain_size_analysis_and_h ow_is_it_calculated/attachment/59d6 3265c49f4 78072ea 189a/ AS%3A273 632960417813%401442250590500/ down load/Basic _principles of particle size analysis_MRK034.pdf*